# EUROPEAN PATENT APPLICATION

(11) **EP 3 745 236 A1**
(43) Date of publication of application: **02.12.2020**
(21) Application number: 18902801.2
(22) Date of filing: 22.10.2018
(51) Int. Cl.: G06F 3/01, G06F 3/0481, G06F 3/16

(54) **INFORMATION PROCESSING DEVICE AND INFORMATION PROCESSING METHOD**

(30) Priority: 24.01.2018 JP 2018009496
(71) Applicant: Sony Corporation, 108-0075 Tokyo (JP)
(72) Inventor: TANAKA, Yoshiki, Tokyo 108-0075 (JP); SUZUKI, Kento, Tokyo 108-0075 (JP); MIKAMI, Hiroaki, Tokyo 108-0075 (JP)
(74) Representative: 2SPL Patentanwälte PartG mbB
(86) International application number: PCT/JP2018/039222
(87) International publication number: WO 2019/146188

(57) **Abstract**

To allow a user to clearly perceive a transition situation of a function providing subject between a plurality of devices.

An information processing apparatus is provided including: a control unit that controls transition of a providing subject that provides a function to a user, between devices, in which in a case where the transition of the providing subject is executed, the control unit causes a transition source device that is a transition source of the providing subject to dynamically output transition information indicating a situation of the transition. Furthermore, an information processing method is provided including: controlling transition of a providing subject that provides a function to a user, between devices, by a processor, in which the controlling further includes causing a transition source device that is a transition source of the providing subject to dynamically output transition information indicating a situation of the transition in a case where the transition of the providing subject is executed.

## Description

### TECHNICAL FIELD

The present disclosure relates to an information processing apparatus and an information processing method.

### BACKGROUND ART

In recent years, with the development of information processing technology, various information processing devices have been developed and spread. For this reason, scenes are increasing in which a user owns a plurality of information processing devices and appropriately selects and uses the terminal depending on the application, situation, and the like. Furthermore, many technologies have been devised for improving convenience of a user using a plurality of information processing devices. For example, Patent Document 1 discloses a technology for providing a workspace that can be commonly used by a plurality of information processing devices.

### CITATION LIST

### PATENT DOCUMENT

Patent Document 1: Japanese Patent Application Laid-Open No. 2017-39746

### SUMMARY OF THE INVENTION

### PROBLEMS TO BE SOLVED BY THE INVENTION

However, for example, in a case where dynamic function provision is performed from an information processing device side and a subject of the function provision transitions between a plurality of information processing devices, it is difficult for a user to grasp which information processing device the subject has transitioned to with the technology described in Patent Document 1.

Thus, in the present disclosure, a new and improved information processing apparatus and information processing method are devised enabled to allow a user to clearly perceive a transition situation of a function providing subject between a plurality of devices.

### SOLUTIONS TO PROBLEMS

According to the present disclosure, an information processing apparatus is provided including: a control unit that controls transition of a providing subject that provides a function to a user, between devices, in which in a case where the transition of the providing subject is executed, the control unit causes a transition source device that is a transition source of the providing subject to dynamically output transition information indicating a situation of the transition.

Furthermore, according to the present disclosure, an information processing method is provided including: controlling transition of a providing subject that provides a function to a user, between devices, by a processor, in which the controlling further includes causing a transition source device that is a transition source of the providing subject to dynamically output transition information indicating a situation of the transition in a case where the transition of the providing subject is executed.

### EFFECTS OF THE INVENTION

As described above, according to the present disclosure, it is possible to allow a user to clearly perceive a transition situation of a function providing subject between a plurality of devices.

Note that, the above-described effect is not necessarily restrictive, and, in addition to the above-described effect, or in place of the above-described effect, any of effects described in the present specification, or other effects that can be grasped from the present specification may be exhibited.

### BRIEF DESCRIPTION OF DRAWINGS

Fig. 1 is a block diagram illustrating a configuration example of an information processing system according to an embodiment of the present disclosure.
Fig. 2 is a diagram illustrating a functional configuration example according to the embodiment.
Fig. 3 is a diagram illustrating a functional configuration example according to the embodiment.
Fig. 4 is a diagram illustrating a functional configuration example according to the embodiment.
Fig. 5 is a diagram illustrating a functional configuration example according to the embodiment.
Fig. 6 is a diagram illustrating an example of transition information display according to the embodiment.
Fig. 7 is a diagram for explaining calculation of availability according to the embodiment.
Fig. 8 is a diagram for explaining presentation of transition information including information on a transition destination device according to the embodiment.
Fig. 9 is a diagram for explaining a presentation example of the transition information at the time of transition failure according to the embodiment.
Fig. 10 is a diagram for explaining a presentation example of the transition information in a case where a time required for transition processing according to the embodiment has elapsed for a predetermined time or longer.
Fig. 11 is a diagram for explaining a presentation example of the transition information related to multiple users and multitasking according to the embodiment.
Fig. 12 is a diagram illustrating a specific example of transition information presentation according to the embodiment.
Fig. 13 is a diagram illustrating a specific example of the transition information presentation according to the embodiment.
Fig. 14 is a diagram illustrating a specific example of the transition information presentation according to the embodiment.
Fig. 15 is a diagram illustrating a specific example of the transition information presentation according to the embodiment.
Fig. 16 is a diagram illustrating a specific example of the transition information presentation according to the embodiment.
Fig. 17 is a flowchart illustrating an operation flow of an information processing server according to the embodiment.
Fig. 18 is a diagram illustrating a hardware configuration example according to the embodiment of the present disclosure.

### MODE FOR CARRYING OUT THE INVENTION

Preferred embodiments of the present disclosure will be described in detail below with reference to the accompanying drawings. Note that, in the present specification and the drawings, components having substantially the same functional configuration are denoted by the same reference signs, and redundant explanations will be omitted.

Note that, the description will be given in the following order.

### 1. Embodiment

1.1. Background
1.2. System configuration example
1.3. Functional configuration example
1.4. Presentation of transition information
1.5. Specific example related to presentation of transition information
1.6. Operation flow
1.7. Effects
   2. Hardware configuration example
   3. Conclusion

### <1. Embodiment>

### <<1.1. Background>>

As described above, in recent years, scenes are increasing in which a plurality of information processing devices is owned, and the plurality of information processing devices is appropriately selected and used depending on the application and situation. The information device as described above includes, for example, an agent device.

The agent device is a general term for a device that presents various types of information to a user while performing conversation with the user by using visual information, voice, and the like, and for example, the agent device is implemented by a smartphone, a wearable device, a tablet, a general-purpose computer, a smart speaker, or the like.

In the future, cases are assumed, such as a case where a user arranges, for example, a plurality of agent devices (hereinafter, also simply referred to as devices) in a home, and wants to continuously use the agent function while moving between rooms, or a case where the user wants to make the agent function transition to a mobile terminal or the like, and use the function at a place where the user goes.

However, here, in a case where information related to a transition situation of the agent function is not presented, it is difficult for the user to grasp which device the function has transitioned to. Furthermore, in a case where the user designates a transition destination of the agent function every time the transition is performed, it is complicated, and a possibility is also assumed that the user designates a non-optimal transition destination.

A technical concept according to the present disclosure has been conceived by focusing on the points described above, and enables a user to clearly grasp a transition situation of a function providing subject between a plurality of devices. For this purpose, an information processing apparatus according to an embodiment of the present disclosure includes a control unit that controls transition of a providing subject that provides a function to a user, between devices. Furthermore, as one of its features, in a case where the transition of the providing subject is executed, the control unit causes a transition source device that is a transition source of the providing subject to dynamically output transition information indicating a situation of the transition.

Hereinafter, detailed descriptions will be given of the above-described features of the information processing apparatus according to the embodiment of the present disclosure and effects achieved by the features.

### <<1.2. System configuration example>>

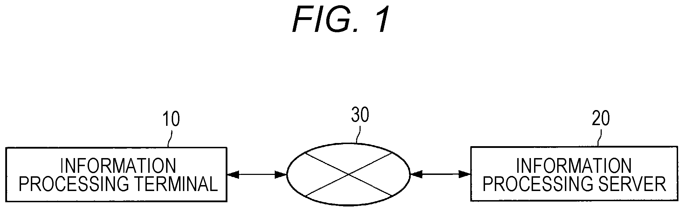

First, a configuration example will be described of an information processing system according to the embodiment of the present disclosure. Fig. 1 is a block diagram illustrating the configuration example of the information processing system according to the present embodiment. Referring to Fig. 1, the information processing system according to the present embodiment includes an information processing terminal 10 and an information processing server 20. Furthermore, the information processing terminal 10 and the information processing server 20 are connected to each other via a network 30 so that they can communicate with each other.

### (Information processing terminal 10)

The information processing terminal 10 according to the present embodiment is a device serving as a providing subject that performs function provision to a user. Functions provided by the information processing terminal 10 include, for example, an agent function. The information processing terminal 10 according to the present embodiment is, for example, implemented by a smartphone, a wearable device, a tablet, a general-purpose computer, a smart speaker, or the like.

### (Information processing server 20)

The information processing server 20 according to the present embodiment is an information processing apparatus that integrally manages information related to a plurality of the information processing terminals 10. Furthermore, the information processing server 20 according to the present embodiment may perform control related to intelligent processing of an agent function provided to the user by the information processing terminal 10.

### (Network 30)

The network 30 has a function of connecting the information processing terminal 10 and the information processing server 20 to each other. The network 30 may include a public line network such as the Internet, a telephone line network, and a satellite communication network, various local area networks (LANs) including Ethernet (registered trademark), a wide area network (WAN), and the like. Furthermore, the network 30 may include a dedicated line network such as Internet protocol-virtual private network (IP-VPN). Furthermore, the network 30 may include a wireless communication network such as Wi-Fi (registered trademark) or Bluetooth (registered trademark).

In the above, the configuration example has been described of the information processing system according to the embodiment of the present disclosure. Note that, the configuration described above with reference to Fig. 1 is merely an example, and the configuration of the information processing system according to the present embodiment is not limited to the example. The configuration of the information processing system according to the present embodiment can be flexibly modified depending on specifications and operations.

### <<1.3. Functional configuration example>>

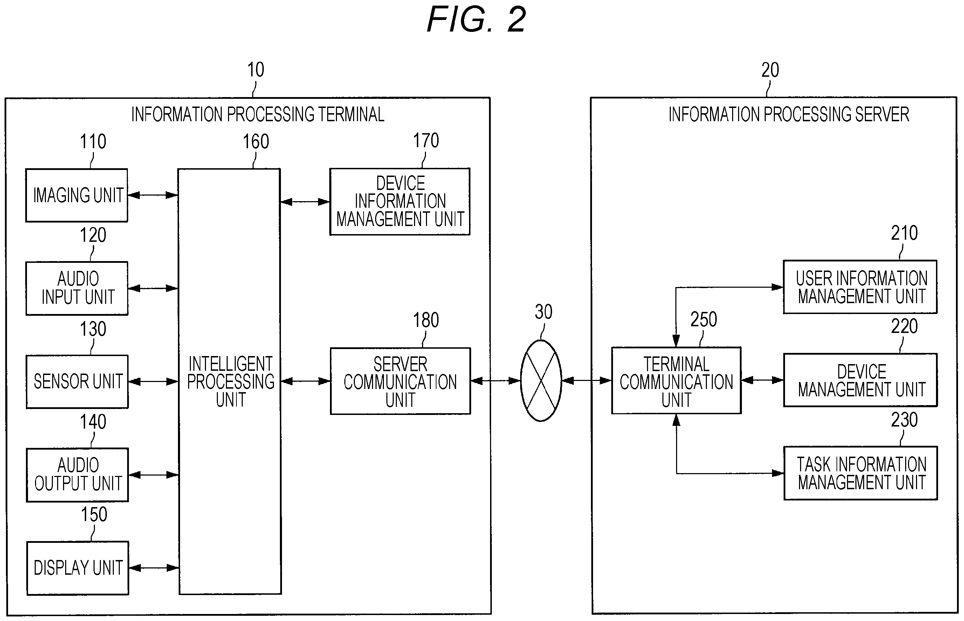

Next, a functional configuration example will be described of the information processing terminal 10 and the information processing server 20 according to the embodiment of the present disclosure. Although there are several possible configurations for the functional configurations of the information processing terminal 10 and the information processing server 20 according to the present embodiment, first, with reference to Fig. 2, a configuration example will be described in a case where the intelligent processing related to the control of the agent function is implemented by the information processing terminal 10.

Referring to Fig. 2, the information processing terminal 10 according to the present embodiment may include an imaging unit 110, an audio input unit 120, a sensor unit 130, an audio output unit 140, a display unit 150, an intelligent processing unit 160, a device information management unit 170, and a server communication unit 180.

Furthermore, the information processing server 20 according to the present embodiment may include a user information management unit 210, a device management unit 220, a task information management unit 230, and a terminal communication unit 250. Hereinafter, basic functions of each configuration will be described.

### (Imaging unit 110)

The imaging unit 110 according to the present embodiment has a function of capturing images of the user and the surrounding environment. Image information captured by the imaging unit 110 is used for user identification and state estimation by the intelligent processing unit 160. The imaging unit 110 according to the present embodiment includes an imaging device enabled to capture an image. Note that, the image includes a moving image in addition to a still image.

### (Audio input unit 120)

The audio input unit 120 according to the present embodiment has a function of collecting sound information such as a user's utterance and an ambient sound generated around the information processing terminal 10. The sound information collected by the audio input unit 120 is used for voice recognition and the like by the intelligent processing unit 160. The audio input unit 120 according to the present embodiment includes a plurality of microphones for collecting sound information.

### (Sensor unit 130)

The sensor unit 130 according to the present embodiment has a function of collecting various types of sensor information regarding the surrounding environment and the user. The sensor information collected by the sensor unit 130 is used for, for example, user detection and user state estimation by the intelligent processing unit 160. The sensor unit 130 includes, for example, a human sensor including an infrared sensor, an acceleration sensor, a gyro sensor, a geomagnetic sensor, and the like.

### (Audio output unit 140)

The audio output unit 140 according to the present embodiment has a function of outputting various sounds including voice. The audio output unit 140 according to the present embodiment outputs a reply to the user's utterance by voice on the basis of control of the intelligent processing unit 160, for example. For this purpose, the audio output unit 140 according to the present embodiment includes an audio output device such as a speaker or an amplifier.

### (Display unit 150)

The display unit 150 according to the present embodiment has a function of outputting visual information such as an image and text. The display unit 150 according to the present embodiment displays the transition information indicating the transition situation of the agent function on the basis of control by the intelligent processing unit 160, for example.

For this purpose, the display unit 150 according to the present embodiment includes a display device that presents visual information, and the like. Examples of the display device include a liquid crystal display (LCD) device, an organic light emitting diode (OLED) device, a touch panel, and the like. Furthermore, the display unit 150 according to the present embodiment may output visual information by a projection function.

### (Intelligent processing unit 160)

The intelligent processing unit 160 according to the present embodiment is responsible for all of the intelligent processing related to the agent function. The intelligent processing unit 160 provides information corresponding to the intention of the utterance on the basis of the utterance of the user collected by the audio input unit 120, for example.

Furthermore, the intelligent processing unit 160 according to the present embodiment functions as a control unit that controls the transition of the providing subject that provides the function to the user, between the devices (the information processing terminals 10). In a case where the transition of the providing subject is executed, the intelligent processing unit 160 dynamically outputs the transition information indicating the situation of the transition to the transition source device that is the transition source of the providing subject, as one of its features.

The transition information described above may include, for example, information regarding the start, progress, or result of processing related to the transition of the providing subject. The intelligent processing unit 160 can cause the display unit 150 to display the transition information by using, for example, a visual expression. Details of functions of the intelligent processing unit 160 according to the present embodiment will be separately described later.

### (Device information management unit 170)

The device information management unit 170 according to the present embodiment has a function of managing information related to the information processing terminal 10. The device information management unit 170 stores, for example, property information and specification information of the information processing terminal 10. Furthermore, the device information management unit 170 may manage a state regarding a position of the information processing terminal 10 and the like.

### (Server communication unit 180)

The server communication unit 180 according to the present embodiment performs information communication with the information processing server 20 via the network 30.

### (User information management unit 210)

The user information management unit 210 according to the present embodiment integrally manages information on the user who owns the information processing terminal 10. The user information management unit 210 stores, for example, general information regarding the user, information regarding preference, information regarding a user context described later, and the like.

### (Device management unit 220)

The device management unit 220 according to the present embodiment integrally manages information regarding the plurality of information processing terminals 10.

### (Task information management unit 230)

The task information management unit 230 according to the present embodiment integrally manages information regarding a task related to the agent function. The task information management unit 230 stores, for example, information regarding a task context described later.

### (Terminal communication unit 250)

The terminal communication unit 250 according to the present embodiment performs information communication with the plurality of information processing terminals 10 via the network 30.

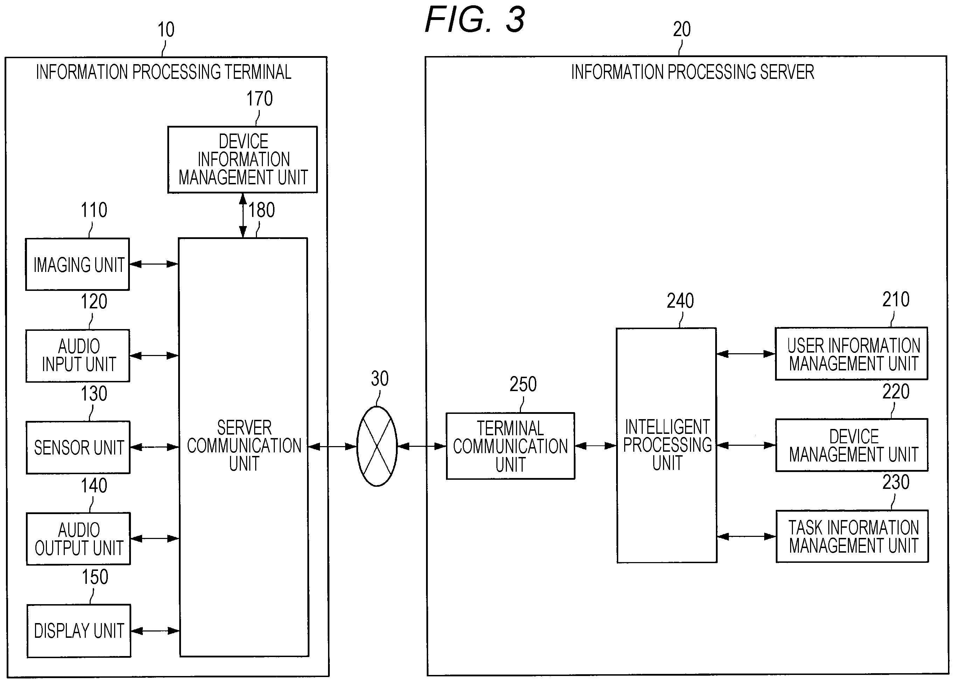

In the above, the configuration example has been described in the case where the intelligent processing related to the control of the agent function is implemented by the information processing terminal 10. Next, with reference to Fig. 3, a configuration example will be described in a case where the intelligent processing described above is implemented by the information processing server 20.

Referring to Fig. 3, it can be seen that the configuration of the intelligent processing unit 160 is deleted from the information processing terminal 10, and an intelligent processing unit 240 is newly added to the information processing server 20, as compared with the configuration illustrated in Fig. 2.

In this case, the intelligent processing unit 240 can execute the intelligent processing related to the agent function by receiving various types of information collected by the information processing terminal 10 via the network 30, and also generate a control signal for controlling output by the information processing terminal 10.

Furthermore, the information processing server 20 controls output by the audio output unit 140 and the display unit 150 included in the information processing terminal 10 by transmitting the generated control signal to the information processing terminal 10.

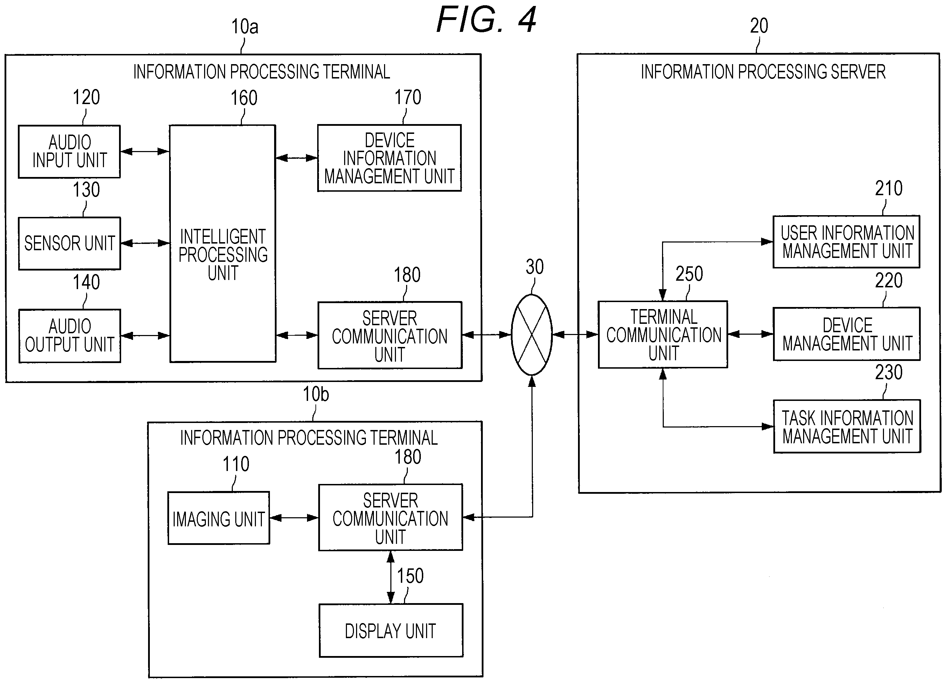

Furthermore, Fig. 4 is a diagram illustrating a configuration example in a case where the intelligent processing related to the agent function is implemented by the information processing terminal 10, and a configuration related to input and output of information is implemented by being distributed by the plurality of information processing terminals 10.

In the case of the example illustrated in Fig. 4, the configuration described with reference to Fig. 2 is implemented being distributed to an information processing terminal 10a including the intelligent processing unit 160, the audio input unit 120, the sensor unit 130, and the audio output unit 140, and an information processing terminal 10b including the imaging unit 110 and the display unit 150.

In this case, the intelligent processing unit 160 of the information processing terminal 10a can receive image information captured by the imaging unit 110 of the information processing terminal 10b via the network 30, and also control the display unit 150 of the information processing terminal 10 via the network 30.

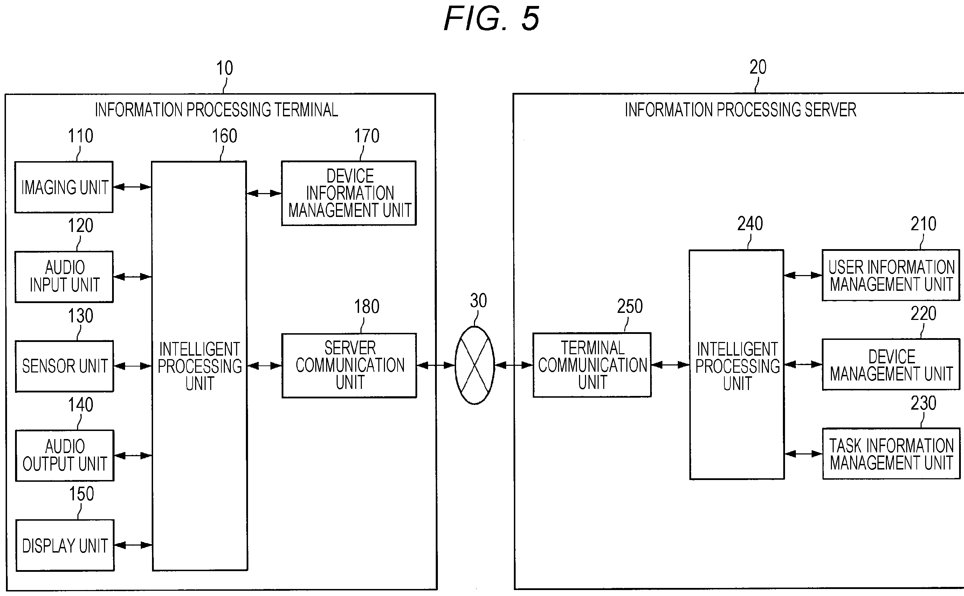

Furthermore, Fig. 5 is a diagram illustrating a configuration example in a case where the intelligent processing related to the agent function is implemented by both the information processing terminal 10 and the information processing server 20. In the case of the example illustrated in Fig. 5, the information processing terminal 10 includes the intelligent processing unit 160, and the information processing server 20 includes the intelligent processing unit 240.

In this case, the intelligent processing unit 160 of the information processing terminal 10, for example, integrates information collected by the imaging unit 110 and the like and recognizes states of the information processing terminal 10 and the user, and the like, and transmits the recognized information to the information processing server 20 via the server communication unit 180 and the network 30.

Furthermore, on the basis of the received recognition information, and user information (user context), device management information, task information (task context) stored by each management unit, the information processing server 20 may determine the information processing terminal 10 that is a transition destination of the agent function, and transmit a control signal related to the transition and transition information to the information processing terminal 10.

In the above, with reference to Figs. 2 to 5, the functional configuration examples have been described of the information processing terminal 10 and the information processing server 20 according to the embodiment of the present disclosure. As described above, the functional configuration according to the present embodiment can be implemented in various forms. Note that, in the following, a description will be given on the basis of the configuration illustrated in Fig. 5, in other words, the case where the intelligent processing related to the agent function is implemented by both the information processing terminal 10 and the information processing server 20. On the other hand, a function described below as a function of the intelligent processing unit 240 may be implemented by the intelligent processing unit 160 of the information processing terminal 10. The functional configuration according to the present embodiment can be flexibly modified depending on specifications and operations.

### <<1.4. Presentation of transition information>>

Next, a detailed description will be given of presentation of transition information according to the present embodiment. The intelligent processing unit 240 according to the present embodiment has a function of controlling the transition of the providing subject that provides the function to the user, and causing the transition source device (the information processing terminal 10) that is the transition source to dynamically output the transition information indicating the situation of the transition. As described above, the function may be an agent function.

Here, an agent can be considered as an entity like a virtual person that responds to various requests of the user in place of a person. For this reason, the intelligent processing unit 240 according to the present embodiment may cause the information processing terminal 10 to output transition information including the start, progress, or result of the processing related to the transition after visualizing the presence of the agent.

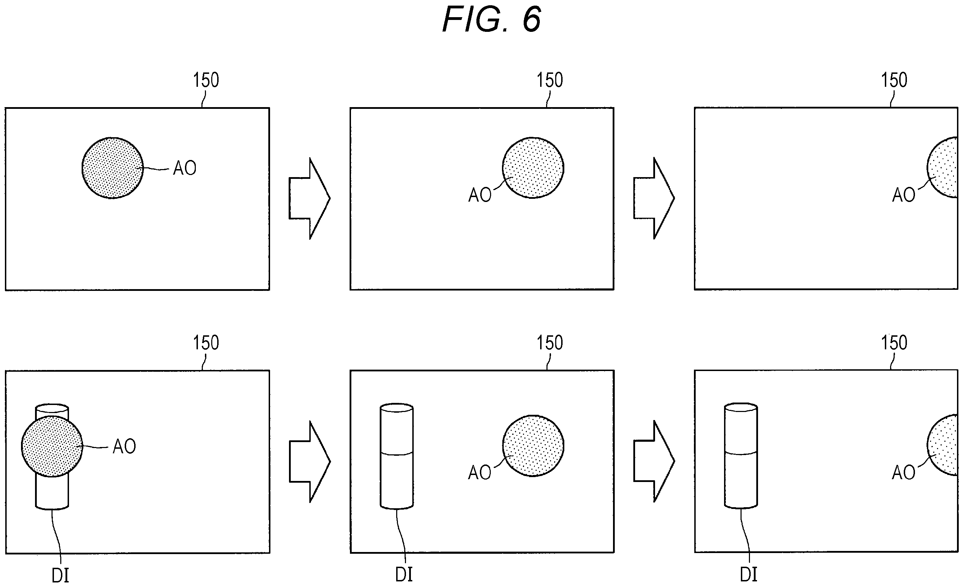

Fig. 6 is a diagram illustrating an example of transition information display according to the present embodiment. In Fig. 6, the left side in the figure illustrates a state before the transition, the center in the figure illustrates a state of the transition process, and the right side in the figure illustrates a state in a case where the transition is completed.

For example, in the example illustrated in the upper part of Fig. 6, the intelligent processing unit 240 first causes the display unit 150 to display an object AO indicating the state of the agent before the transition. Furthermore, the intelligent processing unit 240 may notify the user that function transition has been performed, by rendering a fade-out expression such that the object AO gradually moves toward the outside of a display area as the transition progresses, and the object AO exits the display area at the time of completion of the transition. At this time, the intelligent processing unit 240 may cause the display unit 150 to perform display such as gradually reducing the color or pattern of the object AO.

Note that, the intelligent processing unit 240 may cause the display unit 150 to display an image as illustrated in the figure after transition processing of the agent function is completed. On the other hand, since the situation related to the transition progress cannot be grasped in this case, control may be performed so that the fade-out rendition as described above starts when the transition starts, and the fade-out rendition is completed at the time of completion of the transition.

Furthermore, the intelligent processing unit 240 can also express the transition state by sound. The intelligent processing unit 240, for example, may express the transition state by gradually reducing the volume of the sound output by the audio output unit 140 of the transition source with the progress of the transition processing, and conversely, gradually increasing the volume of the sound output by the audio output unit 140 of the transition destination. In this case, the intelligent processing unit 240 can implement presentation of the transition situation that is easier for the user to grasp, by controlling the fade-out and the fade-in while synchronizing the sounds having changes in the time axis (may include a silent part) between the audio output units 140 of the transition source and the transition destination.

Furthermore, as illustrated in the lower part of Fig. 6, the intelligent processing unit 240 may cause the display unit 150 to display a visual expression corresponding to the transition source device, in other words, the information processing terminal 10 of the transition source. In the example illustrated in the lower part of Fig. 6, the intelligent processing unit 240 causes the display unit 150 to display an icon DI imitating a shape of the information processing terminal 10 of the transition source, and controls a rendition in which the object AO exits from the icon DI. As described above, the intelligent processing unit 240 according to the present embodiment can implement the presentation of the transition situation that is easier for the user to grasp by visualizing the information processing terminal 10 of the transition source.

In the above, an example has been described of the presentation of the transition information according to the present embodiment. For example, when instructed by the user to perform transition of the agent function, the intelligent processing unit 240 may execute transition processing to a designated transition destination device, and perform output control of the transition information as described above.

On the other hand, for example, in a case where the number of information processing terminals 10 owned by the user is large, since it is complicated for the user to designate the transition destination device each time, it is desirable that the intelligent processing unit 240 dynamically selects a transition destination suitable for the situation.

For this purpose, the intelligent processing unit 240 according to the present embodiment may have a function of calculating availability of a plurality of candidate devices that is a transition destination candidate, and selecting a transition destination suitable for a situation from among the plurality of candidate devices on the basis of the availability. Here, the availability may be a score indicating aptitude as a transition destination.

At this time, the intelligent processing unit 240 can calculate the availability on the basis of, for example, device information related to the information processing terminal 10 existing around the transition source device, and context information related to the user and the task, and select the information processing terminal 10 with the highest score of the availability, as the transition destination device.

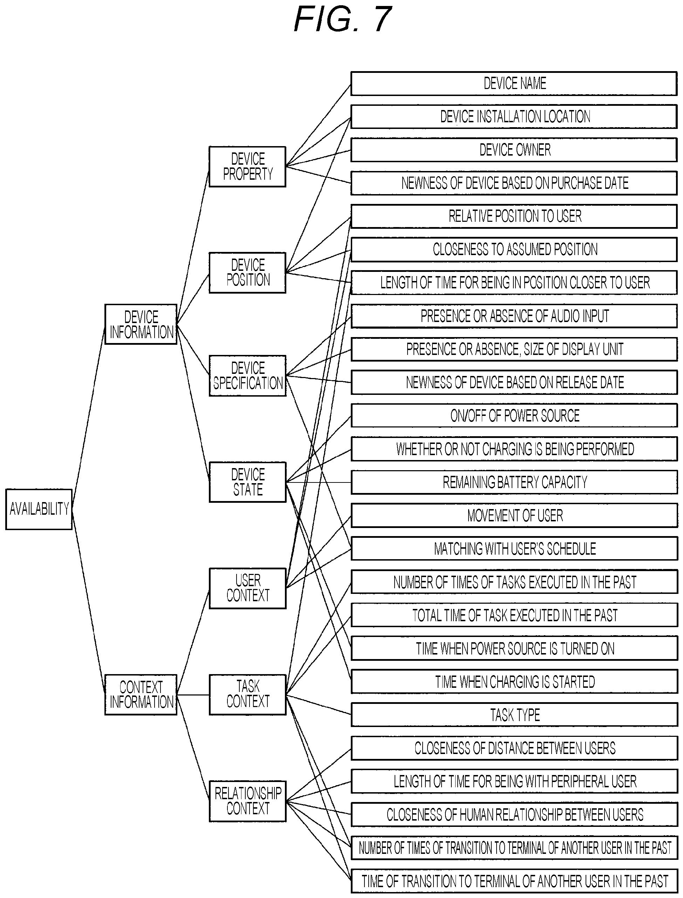

Fig. 7 is a diagram for explaining calculation of availability according to the present embodiment. As illustrated in Fig. 7, the device information according to the present embodiment includes information regarding a device property, state, position, and specification. The device property is information defined for each user who owns the information processing terminal 10, and includes, for example, a user who owns the information processing terminal 10, a device name set by the user, a purchase date of the information processing terminal 10, and the like. For example, the intelligent processing unit 240 may perform the calculation so that the availability is higher of the information processing terminal 10 with a new purchase date.

Furthermore, the device position according to the present embodiment includes an absolute position where the information processing terminal 10 is placed, a relative position to the user, closeness to an assumed position, and the like. Here, the assumed position indicates a position where the information processing terminal 10 can be used correctly, and indicates, for example, a state where the information processing terminal 10 is worn by the user in a case where the information processing terminal 10 is a wearable device or the like. For example, the intelligent processing unit 240 may perform the calculation so that the availability is higher of the information processing terminal 10 closer to the user or the assumed position.

Furthermore, the device specification according to the present embodiment is information indicating performance of the information processing terminal 10, and includes, for example, information such as presence or absence of the audio input unit 120 and the audio output unit 140, a size of the display unit 150, and a release date. For example, the intelligent processing unit 240 may perform the calculation so that the availability is higher of the information processing terminal 10 with high performance.

Furthermore, the device state according to the present embodiment includes, for example, ON/OFF of a power source, a remaining battery capacity, and whether or not charging is being performed. For example, the intelligent processing unit 240 may perform the calculation so that the availability is higher of the information processing terminal 10 having a large remaining battery capacity.

Furthermore, as illustrated in Fig. 7, the context information according to the present embodiment includes information regarding a user context, a task context, and a relationship context. The user context according to the present embodiment indicates a context regarding the user who uses the agent function, and includes, for example, information regarding a user action state including movement, a distance between the information processing terminal 10 and the user, a user's schedule, and the like. For example, the intelligent processing unit 240 may perform the calculation so that the availability is higher of the information processing terminal 10 suitable for an action that the user plans to do.

Furthermore, the task context according to the present embodiment includes information regarding the task executed by the agent function. The task context includes, for example, information such as a task type, and the number of times and total time of execution of the task in the past. For example, the intelligent processing unit 240 may perform the calculation so that the availability is higher of the information processing terminal 10 that has executed the same task many times in the past.

Furthermore, the relationship context according to the present embodiment indicates a context related to a relationship between users. An example of the relationship context is, for example, information such as closeness of a physical distance between the users, closeness of a human relationship between the users (degree of intimacy or the like), and the number of times or time of transition of the agent function to the information processing terminal 10 owned by another user in the past. For example, the intelligent processing unit 240 may perform the calculation so that the availability is higher of the information processing terminal 10 owned by another user who has a higher degree of intimacy with the user using the agent function.

In the above, the calculation has been described of the availability according to the present embodiment. As described above, the intelligent processing unit 240 according to the present embodiment can comprehensively calculate the availability on the basis of various types of information, and select an appropriate transition destination device for each situation.

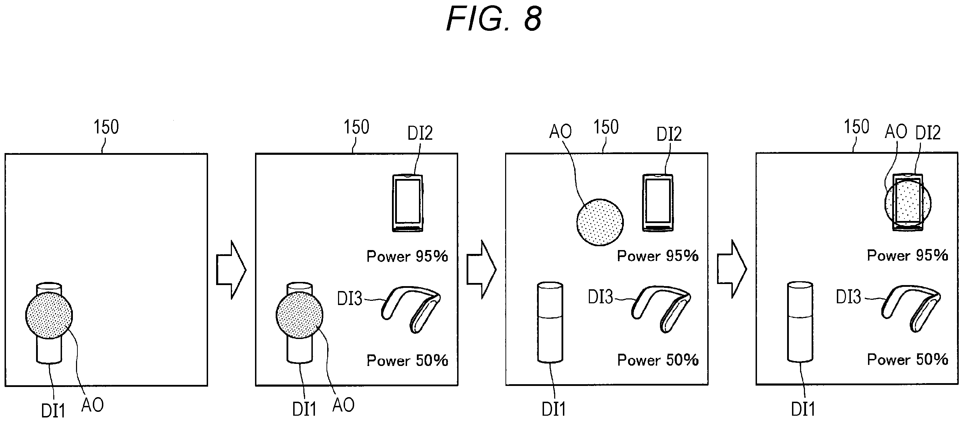

Next, with reference to Fig. 8, a description will be given of presentation of the transition information including information on the transition destination device of the present embodiment. In Fig. 8, one screen on the left in the figure illustrates a state before the transition, two screens on the center in the figure illustrate a state of the transition process, and one screen on the right in the figure illustrates a state in a case where the transition is completed.

In a case where the information processing terminal 10 (transition destination device) that is the transition destination is dynamically selected independent of the user's instruction, the intelligent processing unit 240, as illustrated in Fig. 8, may cause the display unit 150 to display all or some of the information processing terminals 10 (candidate devices) that are candidates of the transition destination, and also control a rendition in which the agent function transitions to a transition destination device selected from the candidate devices.

In the example illustrated in Fig. 8, the intelligent processing unit 240 causes the display unit 150 to execute display in which the object AO indicating the agent function is moved from the transition source device indicated by an icon DI1 to the transition destination device indicated by an icon DI2 among candidate devices indicated by icons DI2 and DI3. At this time, unlike the example illustrated in Fig. 6, the intelligent processing unit 240 does not have to fade the object AO out of the display area of the display unit 150, and may control a display in which the object AO is superimposed on the icon DI2 corresponding to the transition destination device, or a rendition in which the object AO moves beside the icon DI2.

Furthermore, at this time, the intelligent processing unit 240 may cause a part of the context information related to the candidate device to be displayed in association with the icon. In the case of the example illustrated in Fig. 8, the intelligent processing unit 240 causes information regarding the remaining battery capacity of each candidate device to be displayed in association with a corresponding one of the icons DI2 and DI3. Note that, not limited to the illustrated example, the intelligent processing unit 240 may display, for example, a context regarding a position of the candidate device. For example, the intelligent processing unit 240 may cause the fact that the candidate device corresponding to the icon DI2 is in a bag and the candidate device corresponding to the icon DI3 is being worn by the user, or the like to be displayed in association with each icon. With the above-described function of the intelligent processing unit 240 according to the present embodiment, it is possible for the user to grasp a reason why the transition destination device is selected from the candidate devices.

Furthermore, in a case where presentation is performed of the transition information including the candidate devices and the transition destination device as illustrated in Fig. 8, the intelligent processing unit 240 causes the display unit 150 to display the transition information when the transition of the agent function is started and is in a transition state. At this time, the intelligent processing unit 240 may perform control so that the display of the icon corresponding to the candidate device disappears after a lapse of a predetermined time. Furthermore, for example, in a case where it is detected that the user has made an utterance such as "I have confirmed", the intelligent processing unit 240 may perform control to turn off the display of the icon corresponding to the candidate device.

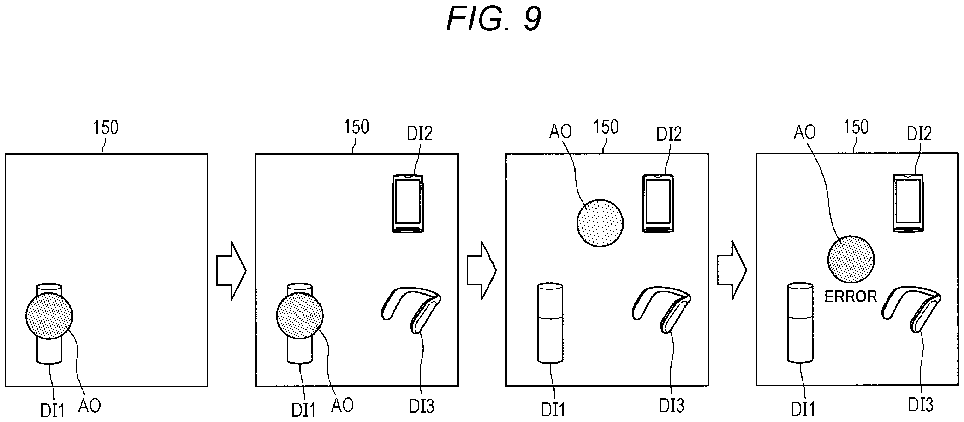

Next, with reference to Fig. 9, a presentation example will be described of the transition information at the time of transition failure according to the present embodiment. In Fig. 9, one screen on the left in the figure illustrates a state before the transition, two screens on the center in the figure illustrate a state of the transition process, and one screen on the right in the figure illustrates a state in a case where the transition has failed.

As described above, the intelligent processing unit 240 according to the present embodiment calculates the availability on the basis of various types of information and selects the transition destination device, but actually, a case is also assumed where the transition cannot be performed normally when the transition is attempted.

For this reason, in a case where the transition cannot be completed normally, the intelligent processing unit 240 according to the present embodiment may cause the display unit 150 to display, for example, words or an icon indicating occurrence of an error in addition to a rendition in which the object AO moved to the vicinity of the icon DI2 corresponding to the transition destination device returns to the side of the icon DI1 corresponding to the transition source device, as illustrated in Fig. 9. Furthermore, the intelligent processing unit 240 may cause the audio output unit 140 to output a voice indicating the occurrence of the error.

With the above-described function of the intelligent processing unit 240 according to the present embodiment, the user can clearly grasp that the transition has failed, and it is possible to perform actions, for example, giving an instruction to transition to another information processing terminal 10, or the like. Note that, in Fig. 9, an example case has been described in which the intelligent processing unit 240 causes the display unit 150 to display icons corresponding to the transition destination device and the candidate device; however, the intelligent processing unit 240 may cause the display unit 150 and the audio output unit 140 to perform display and audio output regarding the error as described above without displaying the icons corresponding to the transition destination device and the candidate device.

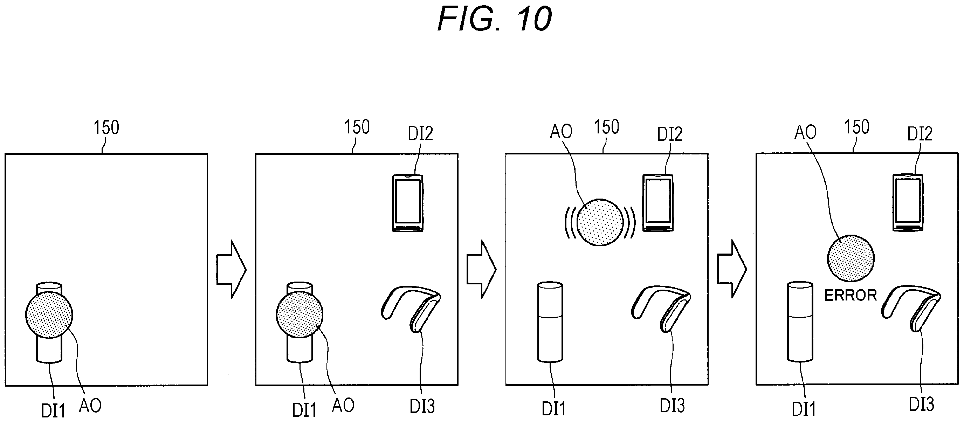

Next, with reference to Fig. 10, a presentation example will be described of the transition information in a case where a time required for transition processing has elapsed for a predetermined time or longer. In Fig. 10, one screen on the left in the figure illustrates a state before the transition, two screens on the center in the figure illustrate a state of the transition process, and one screen on the right in the figure illustrates a state in a case where the transition has failed.

In the case where the time required for the transition processing has elapsed for the predetermined time or longer, the intelligent processing unit 240 causes the display unit 150 to continuously display a rendition in which the object AO swings left and right or up and down, for example, as illustrated in the center right screen in the figure illustrating the state of the transition process. The intelligent processing unit 240 may start the display as described above in a case where the predetermined time has elapsed. Furthermore, the intelligent processing unit 240 causes the rendition described above to be executed continuously until the transition is completed normally or occurrence of an error is detected. In the case of the example illustrated in Fig. 10, the occurrence of the error is detected, whereby the intelligent processing unit 240 causes the display unit 150 to stop the rendition related to the lapse of time, and display an error display.

With the above-described function of the intelligent processing unit 240 according to the present embodiment, it is possible for the user to clearly grasp the state related to progress of the transition. Note that, in Fig. 10, an example case has been described in which the intelligent processing unit 240 causes the display unit 150 to display icons corresponding to the transition destination device and the candidate device; however, the intelligent processing unit 240 may cause the display unit 150 to perform display related to the lapse of time as described above without displaying the icons corresponding to the transition destination device and the candidate device.

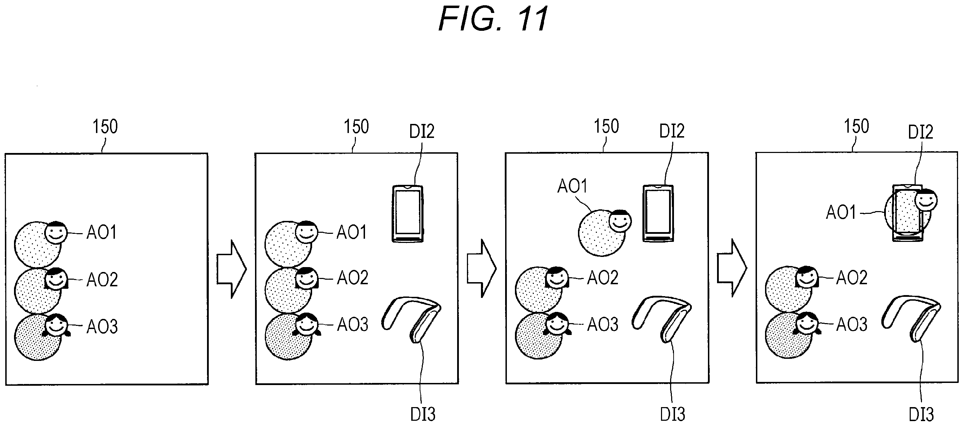

Next, with reference to Fig. 11, a presentation example will be described of the transition information related to multiple users and multitasking. In Fig. 11, one screen on the left in the figure illustrates a state before the transition, two screens on the center in the figure illustrate a state of the transition process, and one screen on the right in the figure illustrates a state in a case where the transition has failed.

The intelligent processing unit 240 according to the present embodiment can control display of the transition information for each function to be transitioned, in other words, for each task, and also cause the display unit 150 to display a user who is a target of each task and the transition information in association with each other.

In the case of the example illustrated in Fig. 11, the intelligent processing unit 240 causes objects AO1 to AO3 corresponding to three tasks to be displayed in different colors, and also expresses target users of the respective tasks by corresponding face icons.

Furthermore, the intelligent processing unit 240 moves only the object AO1 to the icon DI2, thereby expressing that only the task corresponding to the object AO1 among the three tasks transitions to the transition destination device. Note that, the intelligent processing unit 240 may cause words indicating the task type, or the like to be displayed in association with the objects AO1 to AO3, for example.

As described above, with the intelligent processing unit 240 according to the present embodiment, even in a case where there is the plurality of tasks, and the plurality of users exists who is the target of each task, the users are enabled to clearly grasp which task is transitioned to the transition destination, and that the task is targeted for which user.

### <<1.5. Specific example related to presentation of transition information>>

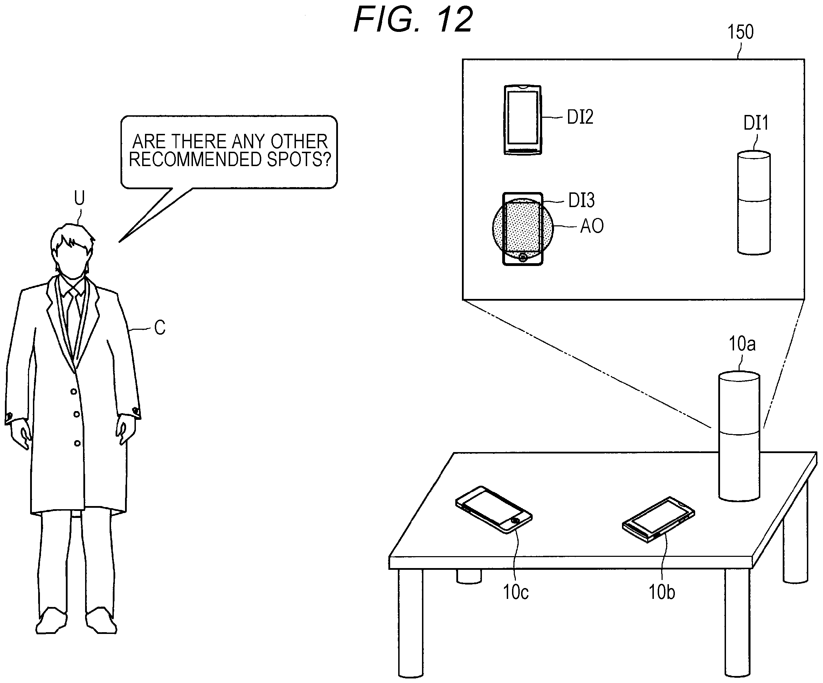

In the above, the function has been described in detail of the intelligent processing unit 240 according to the present embodiment. Next, with specific examples, the description will be continued for control of transition information presentation by the intelligent processing unit 240 according to the present embodiment. Figs. 12 to 16 are diagrams illustrating specific examples of the transition information presentation according to the present embodiment.

Fig. 12 is a diagram illustrating an example of a case where the intelligent processing unit 240 detects going out of a user U, and transitions the agent function to a mobile device.

In Fig. 12, a situation is illustrated in which the user U uses the agent function provided by a stationary information processing terminal 10a to search for a spot to go out with his lover, but considering the promised time, it is time to leave the house.

Here, to continue using the agent function even at a place where the user U goes, it is desirable that the agent function is transitioned to a smartphone-type information processing terminal 10c owned by the user U. At this time, the user U may explicitly instruct the information processing terminal 10a to transition the agent function to the information processing terminal 10c, but as described above, the intelligent processing unit 240 of the present embodiment is enabled to automatically determine the necessity of executing the transition and the transition destination device.

In this case, for example, the intelligent processing unit 240 may determine that the user U is going out soon on the basis of acquired schedule information of the user U and the current time, and determine to transition the agent function to the smartphone-type information processing terminal 10c owned by the user. Note that, the intelligent processing unit 240 may estimate the schedule of the user U from the utterance of the user U or the like. Furthermore, the intelligent processing unit 240 may determine the transition to the information processing terminal 10c with the fact that the user U has moved out of the room with the information processing terminal 10c as a trigger.

Furthermore, the intelligent processing unit 240 can detect, for example, that the user U wears a coat C, and can use that as a transition trigger. The intelligent processing unit 240 may determine wearing of the coat C by image recognition, or may determine the wearing of the coat C from information of a sensor attached to the coat C.

Furthermore, at this time, a case is assumed where there is a smartphone-type information processing terminal 10b owned by the father of the user U in addition to the smartphone-type information processing terminal 10c owned by the user U in the room.

In this case, the intelligent processing unit 240 can acquire owners of the two information processing terminals 10b and 10c from the property information of the device held by the device management unit 220, and correctly select the information processing terminal 10c owned by the user U as a transition destination.

As described above, the intelligent processing unit 240 can select the transition destination device on the basis of various triggers, execute the transition, and present the transition information. In the upper right of the figure, a situation is illustrated in which the display unit 150 performs display in which the object AO moves to the icon DI3 corresponding to the information processing terminal 10c owned by the user U, on the basis of the control of the intelligent processing unit 240. With the intelligent processing unit 240 according to the present embodiment, it is possible for the user U to obtain spot recommendation information by continuously using the agent function even at a place where the user U goes.

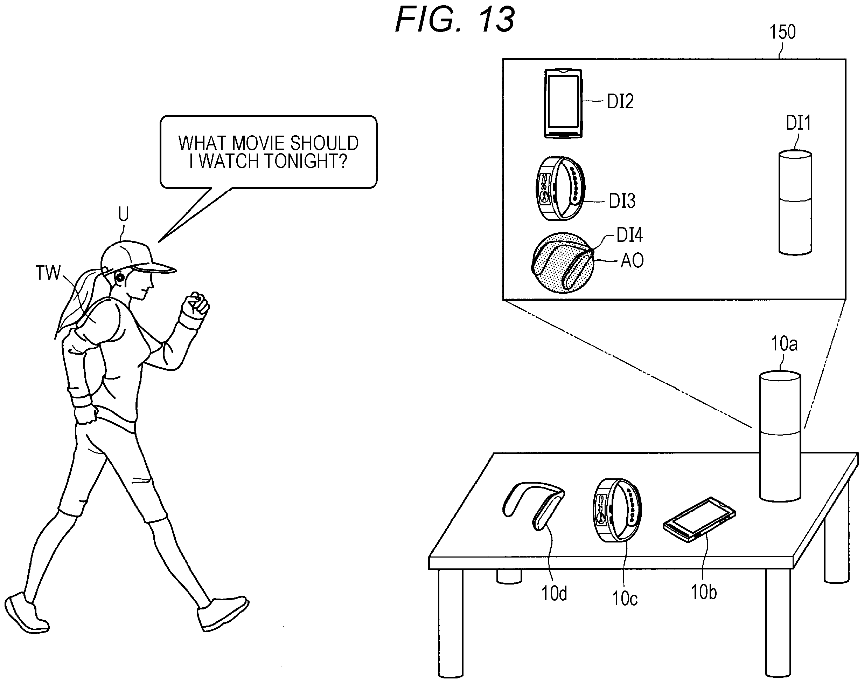

Furthermore, Fig. 13 is a diagram illustrating an example of a case where the intelligent processing unit 240 selects a transition destination device suitable for an action to be performed by a user U at a place where the user U goes.

Fig. 13 illustrates a situation in which the user U is searching for a movie to watch tonight by using the agent function provided by the stationary information processing terminal 10a, but it is almost time to go for daily jogging.

At this time, the intelligent processing unit 240 may estimate that the user U will go jogging soon since the user U performs jogging at the same time every day, and use that as a trigger for the transition, or may use the fact that the user U wears a training wear TW as a transition trigger.

Furthermore, here, a case is assumed where the user U usually has the smartphone-type information processing terminal 10b and performs jogging while wearing a wristwatch-type information processing terminal 10c and a neckband-type information processing terminal 10. In this case, unlike the example illustrated in Fig. 12, since the owner of the information processing terminals 10b to 10d all is the user U, it is difficult to select the transition destination device only from the property information.

In this case, the intelligent processing unit 240 may select the transition destination device on the basis of, for example, a user context or a task text related to the action of the user U. Specifically, the intelligent processing unit 240 can determine that only information presentation by voice is sufficient to search for a movie (task context) while the user U is jogging (user context), and select the neckband-type information processing terminal 10d as the transition destination device.

Furthermore, in a case where there is a context related to a past result that the user U usually searches for a movie while jogging, the intelligent processing unit 240 may select the information processing terminal 10 on which a similar task has been executed most frequently, as the transition destination device.

On the other hand, a case is assumed where the user U usually performs jogging while wearing the wristwatch-type information processing terminal 10c and the neckband-type information processing terminal 10, but leaves the smartphone-type information processing terminal 10b in the house.

In this case, the intelligent processing unit 240 may select the transition destination device in consideration of the assumed position of the device in addition to the determination method described above. For example, the intelligent processing unit 240 may determine that the neckband-type information processing terminal 10d attached to the neck is more suitable for performing the conversation by voice after detecting that the wristwatch-type information processing terminal 10c and the neckband-type information processing terminal 10d are at the assumed positions for normal use, in other words, are worn on the arm or neck.

As described above, the intelligent processing unit 240 can select the transition destination device on the basis of various types of context information, execute the transition, and present the transition information. In the upper right of the figure, a situation is illustrated in which the display unit 150 performs display in which the object AO moves to the icon DI4 corresponding to the information processing terminal 10d owned by the user U, on the basis of the control by the intelligent processing unit 240. With the intelligent processing unit 240 according to the present embodiment, it is possible for the user U to obtain movie recommendation information by continuously using the agent function while jogging at a place where the user U goes.

Note that, in the case of the example illustrated in Fig. 13, for example, there may be inter-device cooperation such as temporarily displaying a map on the wristwatch-type information processing terminal 10c for confirmation of the position of a movie theater or the like. The transition of the agent function according to the present embodiment can be flexibly modified depending on the characteristics of the agent application.

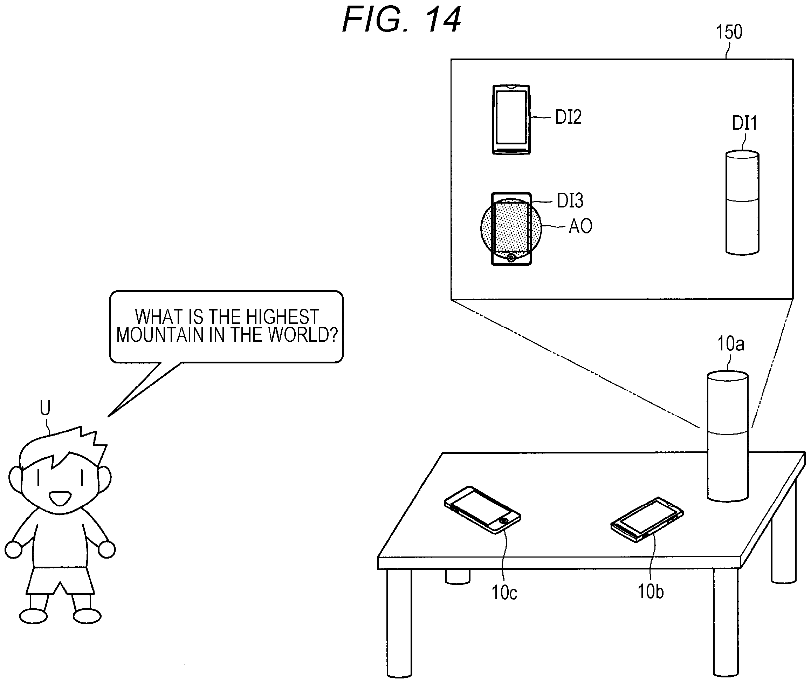

Furthermore, Fig. 14 is a diagram illustrating an example of a case where the intelligent processing unit 240 transitions a task being used by the user U to an information processing terminal 10 owned by another user.

Fig. 14 illustrates a situation in which the user U who is a child is doing research by using the agent function provided by the stationary information processing terminal 10a, but it is almost time for a family to go out. Furthermore, here, a case is assumed where the user U who is a child does not own the information processing terminal 10 such as a smartphone, but the father and mother who go out together own the smartphone-type information processing terminals 10b and 10c, respectively.

At this time, the intelligent processing unit 240 can determine that it is possible to transition the task being used by the user U to either the smartphone-type information processing terminal 10b or 10c owned by the father or mother, on the basis of a relationship context indicating a parent-child relationship of the father, mother, and child.

Furthermore, at this time, the intelligent processing unit 240 can select the information processing terminal 10b owned by the father as the transition destination device, for example, since a remaining battery capacity (device state) of the information processing terminal 10c owned by the mother is small.

Furthermore, the intelligent processing unit 240 can select the information processing terminal 10b owned by the father as the transition destination device, for example, since only the mother is scheduled to act separately for about one hour at a place where they go (user context).

Furthermore, the intelligent processing unit 240 can select the information processing terminal 10b as the transition destination device on the basis of a past result (task context) that a similar task is often performed by the information processing terminal 10b owned by the father, for example.

As described above, the intelligent processing unit 240 can select the information processing terminal 10 owned by another user as the transition destination device on the basis of context information or the like. In the upper right of the figure, a situation is illustrated in which the display unit 150 performs display in which the object AO moves to the icon DI3 corresponding to the information processing terminal 10b owned by the father of the user U, on the basis of the control of the intelligent processing unit 240. With the intelligent processing unit 240 according to the present embodiment, it is possible for the user U to do the research by continuously using the agent function.

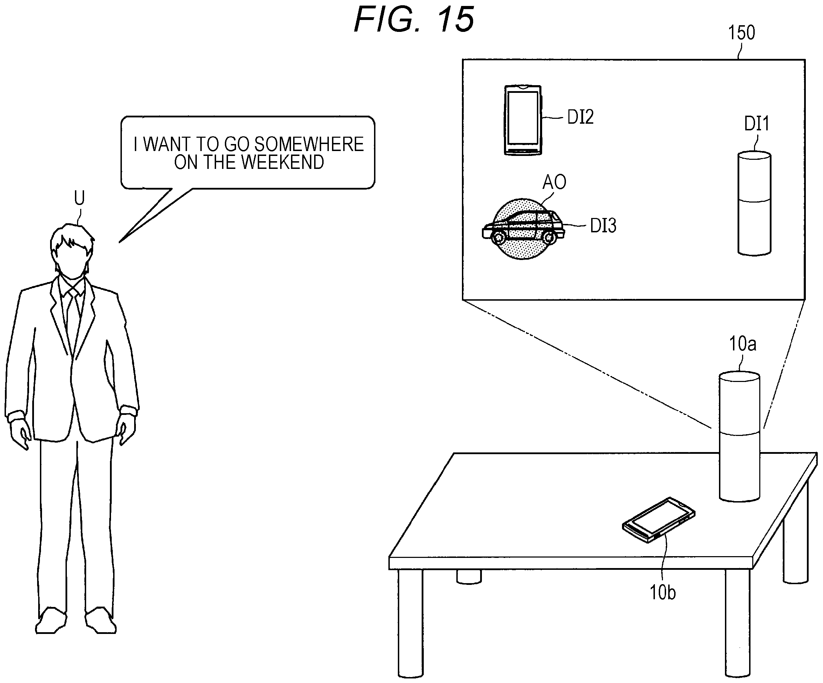

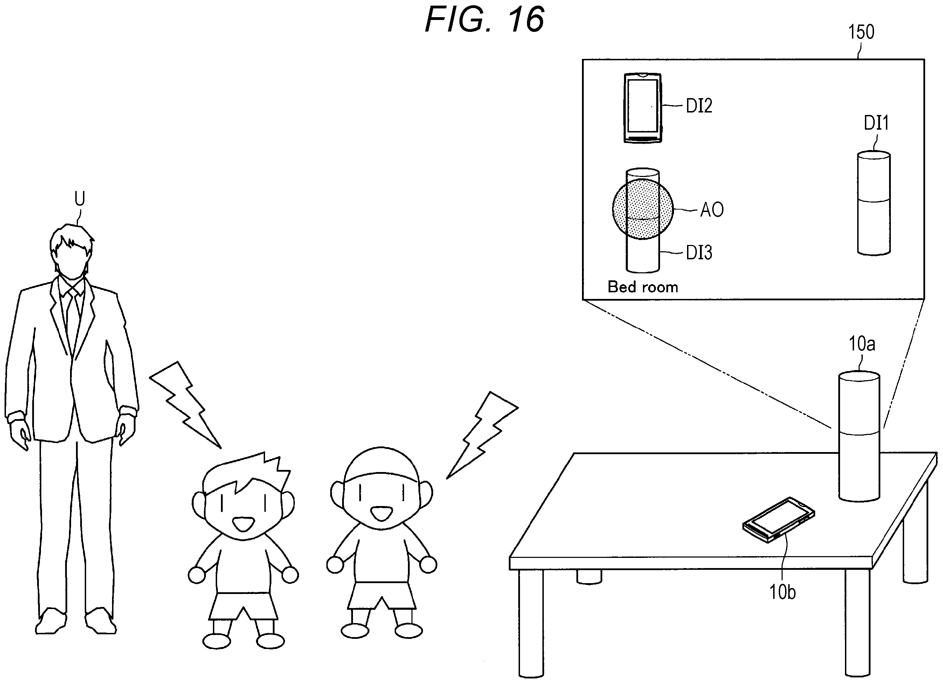

Furthermore, Figs. 15 and 16 are diagrams each illustrating an example of a case where the intelligent processing unit 240 executes a transition involving movement of a space. Fig. 15 illustrates a situation in which a user U is searching for a weekend spot to go out by using the agent function provided by the stationary information processing terminal 10a, but it is almost time to go to work. Furthermore, here, a case is assumed where the user U usually commutes by car.

At this time, the intelligent processing unit 240 may determine to transition the agent function to an information processing terminal 10 included in the car, since the user commutes to work by car on a daily basis (user context).

Furthermore, at this time, the intelligent processing unit 240 may determine to transition the agent function to the information processing terminal 10 included in the car from the fact that the use of the smartphone-type information processing terminal 10b is not appropriate during driving of the car (device information), and the fact that power of the battery is consumed in the use of the smartphone-type information processing terminal 10b, but the information processing terminal 10 included in the car can use electricity generated by the car itself and has a margin in electric power (device state).

As described above, the intelligent processing unit 240 according to the present embodiment can control the transition of the agent function involving the movement of the space, such as from a room to a car. In the upper right of the figure, a situation is illustrated in which the display unit 150 performs display in which the object AO moves to the icon DI3 corresponding to the information processing terminal 10 included in the car, on the basis of the control of the intelligent processing unit 240. Note that, in this case, since it takes time to move to the car, the intelligent processing unit 240 may perform control such as restarting provision of the agent function at a timing when it is detected that the user U has boarded the car.

Furthermore, in Fig. 16, a situation is illustrated in which the user U uses the agent function provided by the stationary information processing terminal 10a, but the living room where the information processing terminal 10 is installed has become noisy since the child's friend has come to play.

At this time, the intelligent processing unit 240 according to the present embodiment may detect that the surrounding area has become noisy, and execute the transition of the agent function by using that as a trigger.

In this case, for example, the intelligent processing unit 240 may detect that there is little noise in the bedroom, and select the information processing terminal 10 arranged in the bedroom as the transition destination device (use of device position and device state). In the upper right of the figure, a situation is illustrated in which the display unit 150 performs display in which the object AO moves to the icon DI3 corresponding to the information processing terminal 10 arranged in the bedroom, on the basis of the control of the intelligent processing unit 240.

On the other hand, in a case where the stationary information processing terminal 10 is only the information processing terminal 10a arranged in the living room, the intelligent processing unit 240 may select the smartphone-type information processing terminal 10b suitable for movement as the transition destination device (use of device information).

On the other hand, in a case where the task being used by the user U is not in a hurry, the intelligent processing unit 240 may suspend the use of the agent function, and proposes, to the user U, resuming the use after the child's friend leaves (use of task context), for example.

As described above, in a case where the intelligent processing unit 240 determines that the use of the agent function at the current position of the user is not appropriate, the intelligent processing unit 240 can improve convenience by proposing a change in space or time to the user.

### <<1.6. Operation flow>>

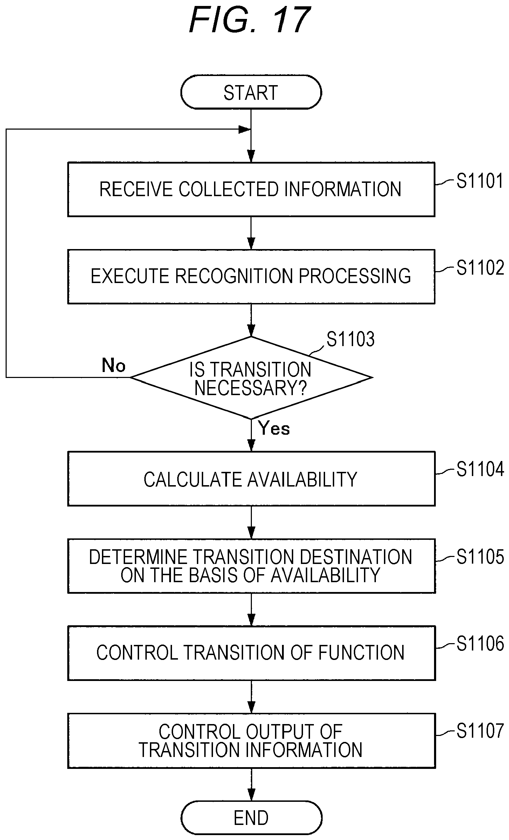

Next, a detailed description will be given of an operation flow of the information processing server 20 according to the present embodiment. Fig. 17 is a flowchart illustrating the operation flow of the information processing server 20 according to the present embodiment.

Referring to Fig. 17, first, the terminal communication unit 250 receives collected information collected by the information processing terminal 10 (S1101). The collected information includes sound information, image information, sensor information, and a recognition processing result based on these types of information.

Next, the intelligent processing unit 240 executes recognition processing based on the collected information received in step S1101 (S1102). The intelligent processing unit 240 may comprehensively recognize the user and the surrounding situation, for example, on the basis of the collected information collected by the plurality of information processing terminals 10. Note that, in a case where the recognition processing result is received from the information processing terminal 10, this step is not necessarily executed.

Next, the intelligent processing unit 240 determines whether or not transition of the agent function is necessary on the basis of the collected information received in step S1101 and the recognition processing result in step S1102 (S1103).

Here, in a case where the intelligent processing unit 240 determines that the transition is unnecessary (S1103: No), the information processing server 20 returns to step S1101.

On the other hand, in a case where the intelligent processing unit 240 determines that the transition is unnecessary (S1103: Yes), the intelligent processing unit 240 calculates the availability of the candidate device (S1104).

Next, the intelligent processing unit 240 determines a transition destination device that is an actual transition destination from among the candidate devices on the basis of the availability calculated in step S1104 (S1105).

Next, the intelligent processing unit 240 transitions the agent function to the transition destination device determined in step S1106 (S1106).

Furthermore, the intelligent processing unit 240 causes the display unit 150 and the audio output unit 140 to output transition information indicating the situation of the transition (S1107).

### <<1.7. Effects>>

In the above, the functions have been described in detail of the information processing terminal 10 and the information processing server 20 according to the present embodiment. As described above, with the information processing server 20 and the information processing terminal 10 according to the present embodiment, the user can clearly grasp information such as whether the transition of the agent function has been normally performed, and to which information processing terminal 10 the agent function has been transitioned.

Furthermore, with the information processing server 20 according to the present embodiment, since it is possible to automatically select a transition destination suitable for the situation even in a case where the user does not explicitly indicate the transition destination, a benefit arises that the user is freed from complicated work such as checking the remaining battery capacity, for example.

Furthermore, with the information processing server 20 according to the present embodiment, it is possible to estimate a user's action from a change of clothes, and the like, and to select an optimal transition destination, and the like, so that the information processing devices can be used in a form fitting into the user's life.

Furthermore, with the information processing server 20 according to the present embodiment, in a case where the plurality of information processing terminals 10 is arranged in the house, continuously using the same task, and the like are possible even if the room is changed.

Furthermore, with the information processing server 20 according to the present embodiment, even in a case where the user owns the plurality of information processing terminals 10, it is possible to automatically select an optimal transition destination depending on the application and the situation.

Furthermore, with the information processing server 20 according to the present embodiment, by considering the parent-child relationship and the like, even a child who does not own the information processing terminal 10 such as a smartphone can easily take out the agent function to a place where the child goes.

Furthermore, with the information processing server 20 according to the present embodiment, not only the transition involving spatial movement but also transition involving temporal movement can be performed, and the convenience can be improved.

Note that, in the above description, the case has been mainly described where the target function of the transition according to the present embodiment is the agent function; however, the target function of the transition according to the present embodiment is not limited to such an example. The technical concept according to the embodiment can be widely applied to various functions that can be used in a plurality of devices.

### <2. Hardware configuration example>

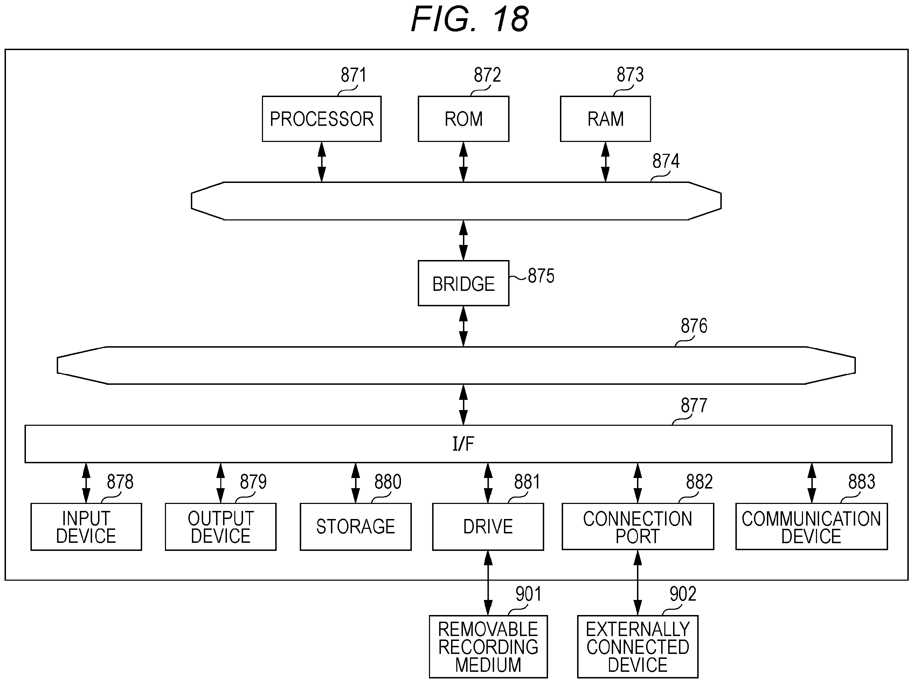

Next, a description will be given of a hardware configuration example common to the information processing terminal 10 and the information processing server 20 according to the embodiment of the present disclosure. Fig. 18 is a block diagram illustrating the hardware configuration example of the information processing terminal 10 and the information processing server 20 according to the embodiment of the present disclosure. Referring to Fig. 18, the information processing terminal 10 and the information processing server 20 include, for example, a processor 871, a ROM 872, a RAM 873, a host bus 874, a bridge 875, an external bus 876, an interface 877, an input device 878, an output device 879, a storage 880, a drive 881, a connection port 882, and a communication device 883. Note that, the hardware configuration illustrated here is an example, and some of the components may be omitted. Furthermore, components other than the components illustrated here may be further included.

### (Processor 871)

The processor 871 functions as an arithmetic processing device or a control device, for example, and controls entire operation of the components or a part thereof on the basis of various programs recorded in the ROM 872, the RAM 873, the storage 880, or a removable recording medium 901.

### (ROM872, RAM873)

The ROM 872 is a means for storing a program read by the processor 871, data used for calculation, and the like. The RAM 873 temporarily or permanently stores, for example, a program read by the processor 871, various parameters that appropriately change when the program is executed, and the like.

### (Host bus 874, bridge 875, external bus 876, interface 877)

The processor 871, the ROM 872, and the RAM 873 are connected to each other via, for example, the host bus 874 capable of high-speed data transmission. On the other hand, the host bus 874 is connected to the external bus 876 having a relatively low data transmission speed via, for example, the bridge 875. Furthermore, the external bus 876 is connected to various components via the interface 877.

### (Input device 878)

As the input device 878, for example, a mouse, a keyboard, a touch panel, a button, a switch, a lever, and the like are used. Moreover, as the input device 878, a remote controller (hereinafter, remote) may be used enabled to transmit a control signal using infrared rays or other radio waves. Furthermore, the input device 878 includes an audio input device such as a microphone. Furthermore, the input device 878 may include a device such as a camera that senses light, a reception device that receives a Global Navigation Satellite System (GNSS) signal, and the like.

### (Output device 879)

The output device 879 is a device enabled to notify the user of acquired information visually or audibly, for example, a display device such as a Cathode Ray Tube (CRT), LCD, or organic EL, an audio output device such as a speaker or a headphone, a printer, a mobile phone, a facsimile, or the like. Furthermore, the output device 879 according to the present disclosure includes various vibration devices enabled to output tactile stimulation.

### (Storage 880)

The storage 880 is a device for storing various data. As the storage 880, for example, a magnetic storage device such as a hard disk drive (HDD), a semiconductor storage device, an optical storage device, a magneto-optical storage device, or the like is used.

### (Drive 881)

The drive 881 is, for example, a device that reads information recorded on the removable recording medium 901 such as a magnetic disk, an optical disk, a magneto-optical disk, or a semiconductor memory, or writes information on the removable recording medium 901.

### (Removable recording medium 901)

The removable recording medium 901 is, for example, a DVD medium, a Blu-ray (registered trademark) medium, an HD DVD medium, various semiconductor storage media, or the like. Of course, the removable recording medium 901 may be, for example, an IC card on which a non-contact type IC chip is mounted, an electronic device, or the like.

### (Connection port 882)

The connection port 882 is, for example, a port for connecting an externally connected device 902, such as a Universal Serial Bus (USB) port, an IEEE1394 port, a Small Computer System Interface (SCSI), an RS-232C port, or an optical audio terminal.

### (Externally connected device 902)

The externally connected device 902 is, for example, a printer, a portable music player, a digital camera, a digital video camera, an IC recorder, or the like.

### (Communication device 883)

The communication device 883 is a communication device for connecting to a network, and is, for example, a communication card for a wired or wireless LAN, Bluetooth (registered trademark), or Wireless USB (WUSB), a router for optical communication, a router for Asymmetric Digital Subscriber Line (ADSL), a modem for various communication, or the like. The communication device 883 may perform communication with a public network such as 3G or LTE, for example.

### <3. Conclusion>

As described above, the information processing server 20 according to the embodiment of the present disclosure includes the intelligent processing unit 240 that controls the transition of the providing subject that provides the function to the user, between the devices. Furthermore, in a case where the transition of the providing subject is executed, the intelligent processing unit 240 according to the present embodiment dynamically outputs the transition information indicating the situation of the transition to the transition source device that is the transition source of the providing subject, as one of the features. According to such a configuration, it is possible to allow the user to clearly perceive the transition situation of the function providing subject between the plurality of devices.

In the above, the preferred embodiments of the present disclosure have been described in detail with reference to the accompanying drawings; however, the technical scope of the present disclosure is not limited to such examples. It is obvious that persons having ordinary knowledge in the technical field of the present disclosure can conceive various modification examples or correction examples within the scope of the technical idea described in the claims, and it is understood that the modification examples or correction examples also belong to the technical scope of the present disclosure.

Furthermore, the steps related to the processing of the information processing server 20 in this specification do not necessarily have to be processed in time series in the order described in the flowchart. For example, the steps related to the processing of the information processing server 20 may be processed in an order different from the order described in the flowchart, or may be processed in parallel.

Note that, the following configurations also belong to the technical scope of the present disclosure.
(1) An information processing apparatus including:
   a control unit that controls transition of a providing subject that provides a function to a user, between devices, in which
   in a case where the transition of the providing subject is executed, the control unit causes a transition source device that is a transition source of the providing subject to dynamically output transition information indicating a situation of the transition.
(2) The information processing apparatus according to (1), in which
   the transition information includes information regarding a start, progress, or a result of processing related to the transition of the providing subject, and
   the control unit causes the transition information to be output by using a visual expression.
(3) The information processing apparatus according to (1) or (2), in which
   the transition information includes information related to a transition destination device that is a transition destination of the providing subject, and
   the control unit causes a visual expression corresponding the transition destination device to be output.
(4) The information processing apparatus according to any of (1) to (3), in which
   the transition information includes information related to a candidate device that is a candidate for a transition destination of the providing subject, and
   the control unit causes a visual expression corresponding to a plurality of the candidate devices to be output.
(5) The information processing apparatus according to (4), in which
   the control unit causes information indicating a context of the candidate device to be output together with the visual expression corresponding to the candidate devices.
(6) The information processing apparatus according to any of (1) to (5), in which
   the transition information includes information related to the transition source device, and
   the control unit causes a visual expression corresponding to the transition source device to be output.
(7) The information processing apparatus according to (2), in which
   the result of the processing related to the transition of the providing subject includes normal completion of the transition or occurrence of an error, and
   the control unit causes information indicating either the normal completion or the error to be displayed.
(8) The information processing apparatus according to any of (1) to (7), in which
   the control unit calculates availability indicating aptitude as a transition destination of a candidate device that is a candidate for the transition destination of the providing subject, and selects a transition destination device that is the transition destination of the providing subject from among a plurality of the candidate devices on the basis of the availability.
(9) The information processing apparatus according to (8), in which
   the control unit calculates the availability on the basis of device information related to the candidate device.
(10) The information processing apparatus according to (9), in which
   the device information includes information regarding at least one of a device property, a device position, a device specification, or a device state.
(11) The information processing apparatus according to (9), in which
   the device information includes information regarding at least one of a position where a device is arranged, closeness to an assumed position, availability of audio input, whether or not a power source is turned on, or a remaining battery capacity.
(12) The information processing apparatus according to any of (8) to (11), in which
   the control unit calculates the availability on the basis of context information related to the transition of the providing subject.
(13) The information processing apparatus according to (12), in which
   the context information includes information regarding at least one of a context of a user, a context of a task, or a context indicating a relationship between users.
(14) The information processing apparatus according to (12), in which
   the context information includes information regarding at least one of a user's schedule, closeness of a relationship between users, or a number of times of previous execution of a target task.
(15) The information processing apparatus according to any of (1) to (14), in which
   the control unit controls display of the transition information for each function provided by the providing subject.
(16) The information processing apparatus according to any of (1) to (15), in which
   the control unit causes a user who is a target of function provision by the providing subject and the transition information to be displayed in association with each other.
(17) The information processing apparatus according to any of (1) to (16), in which
   the control unit causes the transition information to be output by using sound.
(18) The information processing apparatus according to any of (1) to (17), in which
   the function provided by the providing subject includes an agent function.
(19) The information processing apparatus according to any of (1) to (18), further including
   a display unit that displays the transition information on the basis of control by the control unit.
(20) An information processing method including:
   controlling transition of a providing subject that provides a function to a user, between devices, by a processor, in which
   the controlling further includes
   causing a transition source device that is a transition source of the providing subject to dynamically output transition information indicating a situation of the transition in a case where the transition of the providing subject is executed.

### REFERENCE SIGNS LIST

- 10: Information processing terminal
- 110: Imaging unit
- 120: Audio input unit
- 130: Sensor unit
- 140: Audio output unit
- 150: Display unit
- 160: Intelligent processing unit
- 170: Device Information management unit
- 180: Server communication unit
- 20: Information processing server
- 210: User information management unit
- 220: Device management unit
- 230: Task information management unit
- 240: Intelligent processing unit
- 250: Terminal communication unit

## Claims

1. An information processing apparatus comprising:
a control unit that controls transition of a providing subject that provides a function to a user, between devices, wherein
in a case where the transition of the providing subject is executed, the control unit causes a transition source device that is a transition source of the providing subject to dynamically output transition information indicating a situation of the transition.

2. The information processing apparatus according to claim 1, wherein
the transition information includes information regarding a start, progress, or a result of processing related to the transition of the providing subject, and
the control unit causes the transition information to be output by using a visual expression.

3. The information processing apparatus according to claim 1, wherein
the transition information includes information related to a transition destination device that is a transition destination of the providing subject, and
the control unit causes a visual expression corresponding the transition destination device to be output.

4. The information processing apparatus according to claim 1, wherein
the transition information includes information related to a candidate device that is a candidate for a transition destination of the providing subject, and
the control unit causes a visual expression corresponding to a plurality of the candidate devices to be output.

5. The information processing apparatus according to claim 4, wherein
the control unit causes information indicating a context of the candidate device to be output together with the visual expression corresponding to the candidate devices.

6. The information processing apparatus according to claim 1, wherein
the transition information includes information related to the transition source device, and
the control unit causes a visual expression corresponding to the transition source device to be output.

7. The information processing apparatus according to claim 2, wherein
the result of the processing related to the transition of the providing subject includes normal completion of the transition or occurrence of an error, and
the control unit causes information indicating either the normal completion or the error to be displayed.

8. The information processing apparatus according to claim 1, wherein
the control unit calculates availability indicating aptitude as a transition destination of a candidate device that is a candidate for the transition destination of the providing subject, and selects a transition destination device that is the transition destination of the providing subject from among a plurality of the candidate devices on a basis of the availability.

9. The information processing apparatus according to claim 8, wherein
the control unit calculates the availability on a basis of device information related to the candidate device.

10. The information processing apparatus according to claim 9, wherein
the device information includes information regarding at least one of a device property, a device position, a device specification, or a device state.

11. The information processing apparatus according to claim 9, wherein
the device information includes information regarding at least one of a position where a device is arranged, closeness to an assumed position, availability of audio input, whether or not a power source is turned on, or a remaining battery capacity.

12. The information processing apparatus according to claim 8, wherein
the control unit calculates the availability on a basis of context information related to the transition of the providing subject.

13. The information processing apparatus according to claim 12, wherein
the context information includes information regarding at least one of a context of a user, a context of a task, or a context indicating a relationship between users.

14. The information processing apparatus according to claim 12, wherein
the context information includes information regarding at least one of a user's schedule, closeness of a relationship between users, or a number of times of previous execution of a target task.

15. The information processing apparatus according to claim 1, wherein
the control unit controls display of the transition information for each function provided by the providing subject.

16. The information processing apparatus according to claim 1, wherein
the control unit causes a user who is a target of function provision by the providing subject and the transition information to be displayed in association with each other.

17. The information processing apparatus according to claim 1,wherein
the control unit causes the transition information to be output by using sound.

18. The information processing apparatus according to claim 1, wherein
the function provided by the providing subject includes an agent function.

19. The information processing apparatus according to claim 1, further comprising
a display unit that displays the transition information on a basis of control by the control unit.

20. An information processing method comprising:
controlling transition of a providing subject that provides a function to a user, between devices, by a processor, wherein
the controlling further includes
causing a transition source device that is a transition source of the providing subject to dynamically output transition information indicating a situation of the transition in a case where the transition of the providing subject is executed.
